# EUROPÄISCHE PATENTSCHRIFT

(11) **EP 2 227 349 B1**
(45) Veröffentlichungstag und Bekanntmachung des Hinweises auf die Patenterteilung: **27.04.2011**
(21) Anmeldenummer: 08857305.0
(22) Anmeldetag: 27.11.2008
(51) Int. Cl.: B23Q 11/08, B23Q 7/04, B25J 21/00

(54) **SCHUTZVORRICHTUNG FÜR EINE STATION FÜR PROZESSE, VERFAHREN ZUM AUTOMATISCHEN BE- UND/ODER ENTLADEN EINER STATION FÜR PROZESSE**
PROTECTIVE DEVICE FOR A STATION FOR PROCESSES, METHOD FOR AUTOMATICALLY LOADING AND/OR UNLOADING A STATION FOR PROCESSES
DISPOSITIF DE PROTECTION POUR UN POSTE DE PROCESSUS, ET PROCÉDÉ DE CHARGEMENT ET/OU DE DÉCHARGEMENT AUTOMATIQUE D'UN POSTE DE PROCESSUS

(30) Priorität: 07.12.2007 DE 102007060724
(43) Veröffentlichungstag der Anmeldung: 15.09.2010
(73) Patentinhaber: Faude, Dieter, 71116 Gärtringen (DE)
(72) Erfinder: Faude, Dieter, 71116 Gärtringen (DE)
(74) Vertreter: Müller, Thomas
(86) Internationale Anmeldenummer: PCT/DE2008/002030
(87) Internationale Veröffentlichungsnummer: WO 2009/071073

(56) Entgegenhaltungen:
- EP-A- 1 122 039
- DE-A1- 3 532 305
- DE-A1- 19 753 603
- DE-A1-102006 003 985

## Beschreibung

### Stand der Technik

Die Erfindung geht aus von einer Schutzvorrichtung für eine Station für Prozesse, wie z.B. prüfen, montieren sortieren, dichten, befüllen, bearbeiten und/odgl., nach der Gattung des Anspruchs 1, und von einem Verfahren zum automatischen Be- und/oder Entladen einer Station für Prozesse, nach der Gattung des Anspruchs 14.

Aus der industriellen Produktion ist bisher bekannt, dass mit ortsfesten Be- und/oder Entladevorrichtungen, z.B. mit Ladeportalen, Robotern oder mit Sonderladesystemen gearbeitet wird, die speziell für eine Bearbeitungsmaschine oder eine Bearbeitungsaufgabe konzipiert sind. Nachteilig ist hierbei, dass dieses Vorgehen insbesondere dann aufwendig und kostenträchtig ist, wenn bei Werkstücken die Bearbeitungszeiten in einem Bereich liegen, bei der eine separate Ladeeinheit für das Werkstück nicht ausgelastet wäre.

Um die Auslastung der Ladeeinheit zu erhöhen wird in der Offenlegungsschrift DE 196 42 763 A1 eine Vorrichtung zum Be- und Entladen von Bearbeitungsmaschinen vorgeschlagen, die es zwar ermöglicht, dass die Ladeeinheit an mehreren Bearbeitungsmaschinen eingesetzt werden kann, doch bedarf es hierzu eines hohen konstruktiven Aufwandes, da die Ladeeinheit zum An- bzw. Abkoppeln angehoben oder abgesenkt werden muss.

In der Offenlegungsschrift DE 10 2006 003 985 A1 wird eine Werkzeugmaschine beschrieben, die einen Arbeitsraum aufweist, der durch eine einen Durchbruch aufweisende Wand begrenzt ist, wobei Werkstücke mittels einer auf der dem Arbeitsraum abgewandten Seite der Wand angeordnete Handhabungseinrichtung in den Arbeitsraum der Werkzeugmaschine einsetzbar und/oder aus diesem entnehmbar sind. Nachteilig ist, dass die Ausstattung einer Werkzeugmaschine mit einer Handhabungseinrichtung sehr teuer ist.

### Die Erfindung und ihre Vorteile

Die erfindungsgemäße Station für Prozesse, wie z.B. prüfen, montieren (Montagestation), sortieren, dichten, befüllen, bearbeiten (Bearbeitungsstation) und/odgl., mit den Merkmalen des Anspruchs 1, und das erfindungsgemäße Verfahren zum automatischen Be- und/oder Entladen einer Station für Prozesse, wie z.B. prüfen, montieren (Montagestation), sortieren, dichten, befüllen, bearbeiten (Bearbeitungsstation) und/odgl., mit den Merkmalen des Anspruchs 14, haben demgegenüber den Vorteil, dass durch die Verwendung einer an der Station für Prozesse angeordneten Schutzvorrichtung, die eine bewegbare Roboterzelle ist, neben dem Schutz einer Bedienperson ein rationeller Einsatz des Roboters gewährleistet wird, so dass auf diese Weise beispielsweise eine Fertigung realisiert werden kann, bei der mit einem einzigen Roboter mehrere Station für Prozesse, insbesondere Werkzeugmaschinen, be- und/oder entladen werden können.

Nach einer vorteilhaften Ausgestaltung der erfindungsgemäßen Station für Prozesse ist die Roboterzelle mittels einer Fixiervorrichtung an der Station angeordnet.

Nach einer zusätzlichen vorteilhaften Ausgestaltung der erfindungsgemäßen Station für Prozesse ist die Roboterzelle lösbar an der Station oder am Boden angeordnet.

Nach einer diesbezüglichen vorteilhaften Ausgestaltung der erfindungsgemäßen Station für Prozesse ist die Roboterzelle schwenkbar, verschiebbar odgl. an der Station angeordnet ist.

Nach einer diesbezüglichen vorteilhaften Ausgestaltung der erfindungsgemäßen Station für Prozesse ergänzt die Schutzvorrichtung die herkömmliche Schutzeinrichtung. Durch das Vorhandensein der herkömmlichen Schutzvorrichtung ist die Station auch ohne die erfindungsgemäße Schutzvorrichtung sicher einsetzbar.

Nach einer zusätzlichen vorteilhaften Ausgestaltung der erfindungsgemäßen Station für Prozesse ist in der Roboterzelle mindestens ein Roboter angeordnet.

Nach einer diesbezüglichen vorteilhaften Ausgestaltung der erfindungsgemäßen Station für Prozesse ist der Roboter ein Knickarmroboter, Scararoboter oder ein Linear-Achsen-System. Bevorzugt handelt es sich um einen sechsachsigen Knickarmroboter.

Nach einer zusätzlichen vorteilhaften Ausgestaltung der erfindungsgemäßen Station für Prozesse weist der Roboter ein Einzelgreifer-, Doppelgreifer- oder Mehrfachgreifersystem auf.

Nach einer zusätzlichen vorteilhaften Ausgestaltung der erfindungsgemäßen Station für Prozesse weist die Schutzvorrichtung mindestens eine Tür auf.

Nach einer zusätzlichen vorteilhaften Ausgestaltung der erfindungsgemäßen Station für Prozesse weist die Schutzvorrichtung zur Anpassung mindestens an der der Station zugewandten Seite eine Anpassvorrichtung auf. Die Anpassvorrichtung bietet den Vorteil, dass die erfindungsgemäße Schutzvorrichtung (bevorzugt automatisch) an Stationen mit unterschiedlichen Außenkonturen anpassbar ist, so dass dadurch die Sicherheit der Bedienperson zusätzlich erhöht wird.

Nach einer diesbezüglichen vorteilhaften Ausgestaltung der erfindungsgemäßen Station für Prozesse ist die Anpassvorrichtung als Tür ausgestaltet. Dadurch wird der Zugang des Bedienpersonals zur Station ermöglicht (z.B. im Falle eines notwendigen Werkzeugwechsels), wobei bevorzugt die Türe derart verschwenkt wird, dass sie sich, während die Bedienperson an der Station arbeitet, im Rücken der Bedienperson befindet und dadurch die Bedienperson vor dem Roboter schützt.

Nach einer diesbezüglichen vorteilhaften Ausgestaltung der erfindungsgemäßen Station für Prozesse weist Anpassvorrichtung an ihrer der Station zugewandten Seite flexibles Material (z.B. Hartgummi, Lamellen, Kunststofflamellen) auf.

Nach einer diesbezüglichen vorteilhaften Ausgestaltung der erfindungsgemäßen Station für Prozesse wird das flexible Material durch federbelastete Stäbe gebildet. Werden statt der Stäbe Lamellen verwendet, so werden diese vor der Inbetriebnahme beispielsweise manuell aus der Anpassungsvorrichtung herausgezogen (verschoben) und bevorzugt mit einem zentralen Verschluss verspannt.

Nach einer vorteilhaften Ausgestaltung des erfindungsgemäßen Verfahrens zum automatischen Be- und/oder Entladen einer Station für Prozesse, wie z.B. prüfen, montieren sortieren, dichten, befüllen, bearbeiten und/odgl., wird die Schutzvorrichtung von der Station oder dem Boden getrennt, falls sie bei einer anderen Station benötigt wird, um sie anschließend mittels der Fixiervorrichtung mit der anderen Station oder dem Boden zu verbinden und zum Einsatz zu bringen.

Nach einer zusätzlichen vorteilhaften Ausgestaltung des erfindungsgemäßen Verfahrens wird als Station für Prozesse eine Station für Prozesse nach einem der Ansprüche 1 bis 13 eingesetzt.

Weitere Vorteile und vorteilhafte Ausgestaltungen der Erfindung sind der nachfolgenden Beschreibung, der Zeichnung und den Ansprüchen entnehmbar.

### Zeichnung

Ausführungsbeispiele des Gegenstandes der Erfindung sind in der Zeichnung dargestellt und im Folgenden näher beschrieben.
Es zeigen:
Fig. 1 eine Vorderansicht der erfindungsgemäßen Schutzvorrichtung vor einer Station für Prozesse (z.B. Werkzeugmaschine) in der Be- und/oder Entladeposition;
Fig. 2 eine Draufsicht der erfindungsgemäßen Schutzvorrichtung vor einer Station für Prozesse (z.B. Werkzeugmaschine) in der Be- und/oder Entladeposition;
Fig. 3 eine Vorderansicht der erfindungsgemäßen Schutzvorrichtung vor einer Station für Prozesse (z.B. Werkzeugmaschine) in einer die Be- und/oder Entladeöffnung freigebenden Position;
Fig. 4 eine Vorderansicht der erfindungsgemäßen Schutzvorrichtung vor einer Station für Prozesse (z.B. Werkzeugmaschine) in einer die Be- und/oder Entladeöffnung freigebenden Position und
Fig. 5 eine perspektivische Ansicht der erfindungsgemäßen Schutzvorrichtung vor einer Station für Prozesse (z.B. Werkzeugmaschine) in der Be- und/oder Entladeposition.

### Beschreibung des Ausführungsbeispiels

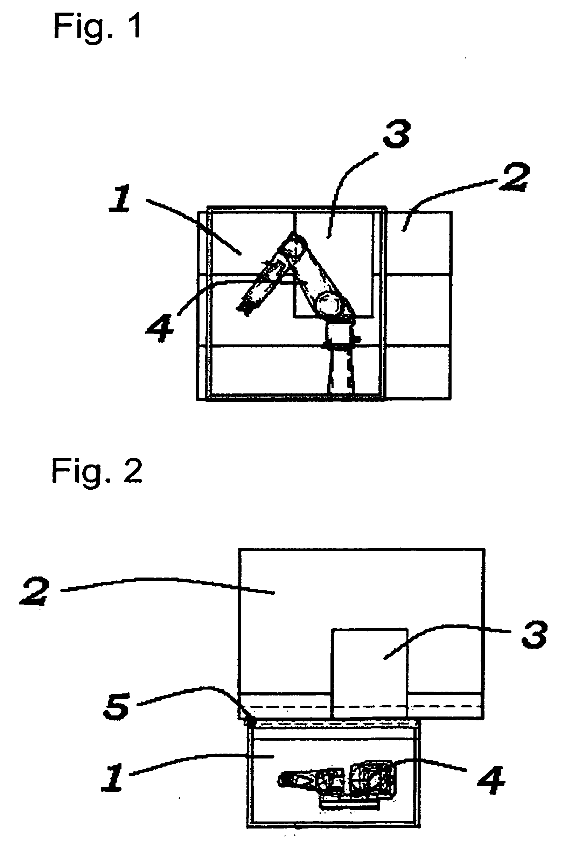

Die Fig. 1 und 2 zeigen eine Vorderansicht und eine Draufsicht der erfindungsgemäßen Schutzvorrichtung 1 vor einer Station für Prozesse 2 (z.B. Werkzeugmaschine) in der Be- und/oder Entladeposition. Die Station für Prozesse 2 weist eine Öffnung 3 (Be- und/oder Entladeöffnung) auf, die während des Einsatzes der erfindungsgemäßen Schutzvorrichtung 1 durch die erfindungsgemäße Schutzvorrichtung 1 zum Schutz des Bedienpersonals verdeckt ist. Im Innenraum der erfindungsgemäßen Schutzvorrichtung 1 ist ein Roboter 4 zum Be- und/oder Entladen angeordnet. Mittels einer Fixiervorrichtung 5 ist die erfindungsgemäße Schutzvorrichtung 1 mit der Station für Prozesse 2 verbunden. Der Roboter 4 kann selbstverständlich auch zusammen mit einem nicht dargestellten Zu- oder Abführband, einem nicht dargestellten Palettierer, mit einer nicht dargestellten Prüfstation und/odgl. zusammenarbeiten.

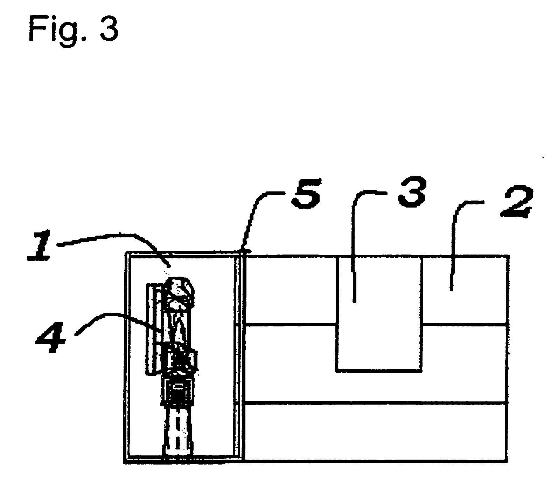

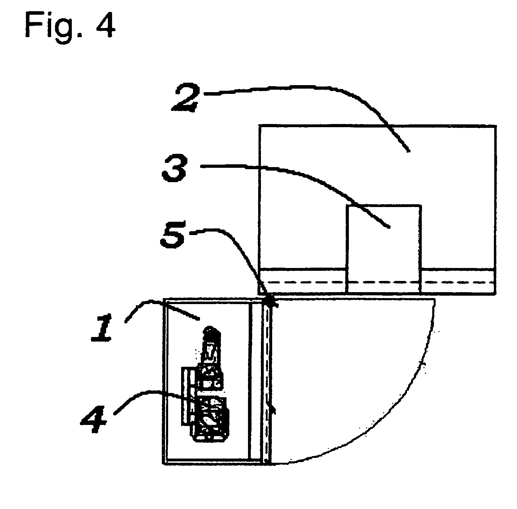

Die Fig. 3 und 4 zeigen eine Vorderansicht und eine Draufsicht der erfindungsgemäßen Schutzvorrichtung 1 vor einer Station für Prozesse 2 (z.B. Werkzeugmaschine) in einer die Be- und/oder Entladeöffnung (Öffnung 3) freigebenden Position. In diesem Ausführungsbeispiel dient als Fixiervorrichtung 5 ein Fixierpunkt, der gleichzeitig als Anbindung und als Drehpunkt wirkt. Dadurch ist es möglich die erfindungsgemäße Schutzvorrichtung 1 z.B. bei Störungen oder für einen Werkzeugwechsel in der Station für Prozesse 2, wie eine Tür, von der Öffnung 3 wegzubewegen. Selbstverständlich sind auch andere, nicht dargestellte Bewegungsmöglichkeiten, wie z.B. ein Schwenken nach oben, ein seitliches Verschieben, ein Verschieben nach oben odgl. denkbar.

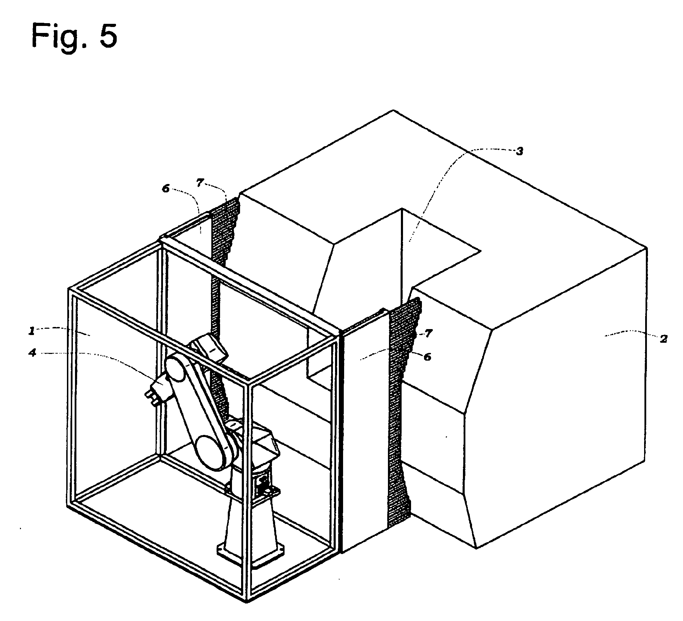

Fig. 5 zeigt eine perspektivische Ansicht der erfindungsgemäßen Schutzvorrichtung 1 vor einer Station für Prozesse 2 (z.B. Werkzeugmaschine) in der Be- und/oder Entladeposition, wobei in dieser Darstellung die Fixiervorrichtung, die in diesem Fall auch am Boden sein kann statt an der Maschine, nicht sichtbar ist. Um bei einem Einsatz der erfindungsgemäßen Schutzvorrichtung 1 bei mehreren Stationen für Prozesse 2, die gleiche oder unterschiedliche Bearbeitungsaufgaben erfüllen können, eine Anpassung an unterschiedliche Außenkonturen der Stationen für Prozesse 2 zu gewährleisten, ist die erfindungsgemäße Schutzvorrichtung 1 mit einer Anpassungsvorrichtung 6, die beweglich oder starr an der erfindungsgemäßen Schutzvorrichtung 1 angeordnet sein kann, ausgestattet. Im gezeigten Beispiel wird die Anpassungsvorrichtung 6 durch Stäbe 7 gebildet, die durch nicht dargestellte Federn federbelastet sind. Wird nun die erfindungsgemäße Schutzvorrichtung 1 aus ihrer die Be- und/oder Entladeöffnung (Öffnung 3) freigebenden Position in die dargestellte Be- und/oder Entladeposition gebracht, so werden in Abhängigkeit der Außenkontur der Station für Prozesse 2 die Stäbe 7 mehr oder weniger in die Anpassungsvorrichtung 6 gedrückt. Dadurch wird das Ankoppeln der erfindungsgemäßen Schutzvorrichtung 1 an eine beliebige Werkzeugmaschine möglich Durch die Anpassungsvorrichtung 6 erfolgt eine Abdichtung, die eine zusätzliche Sicherheit für das Bedienpersonal bewirkt. Unabhängig davon, ob eine Anpassungsvorrichtung 7 zum Einsatz kommt, wird, wenn die erfindungsgemäße Schutzvorrichtung 1 aus ihrer die Be- und/oder Entladeöffnung (Öffnung 3) freigebenden Position in die dargestellte Be- und/oder Entladeposition gebracht wird, die herkömmliche Schutzvorrichtung automatisch oder manuell in eine die Be- und/oder Entladeöffnung (Öffnung 3) freigebenden Position gebracht.

Ein möglicher Verfahrensablauf ist der Folgende: Die erfindungsgemäße Schutzvorrichtung 1 besteht aus einem Grundgestell, das über Rollen auf dem Hallenboden zu einer Werkzeugmaschine (Station für Prozesse 2) transportiert wird. Die erfindungsgemäße Schutzvorrichtung 1 kann dabei manuell unter Benutzung eines Handgriffs zu den einzelnen Werkzeugmaschinen transportiert werden oder ist als Flurförderfahrzeug ausgebildet. Im Frontbereich der Werkzeugmaschine können sich Fixierstücke befinden, an denen die erfindungsgemäße Schutzvorrichtung 1 fest fixiert werden kann. Zum Spannen der erfindungsgemäßen Schutzvorrichtung 1 in den Fixiervorrichtungen ist eine Spanneinheit vorgesehen, die an der erfindungsgemäßen Schutzvorrichtung 1 befestigt ist. Nachdem die erfindungsgemäße Schutzvorrichtung 1 vor die Werkzeugmaschine geschwenkt wurde, wird diese fixiert. Nach dem Fixieren der erfindungsgemäßen Schutzvorrichtung 1 im angekoppelten Zustand werden die Rollenlager vom Hallenboden abgehoben, so dass die komplette Ladeeinheit auf dem Hallenboden steht. Das Lösen der erfindungsgemäßen Schutzvorrichtung 1 von der Werkzeugmaschine erfolgt in umgekehrter Reihenfolge.

Bevorzugt ist die für den Roboter 4 notwendige Steuereinheit in der erfindungsgemäßen Schutzvorrichtung 1 oder bei bzw. in der Werkzeugmaschine angeordnet, so dass z.B. durch einfaches Kabelverbinden der Roboter einsatzbereit ist. Die erfindungsgemäße Schutzvorrichtung 1 kann also zu verschiedenen Werkzeugmaschinen einfach und schnell transportiert werden. Dies ist vor allem dann von Vorteil, wenn nur eine Teilbearbeitung an verschiedenen Maschinen durchgeführt wird oder große Stückzahlen nur an bestimmten Maschinen bearbeitet werden können. Trotzdem besteht die Möglichkeit, dass bei Einzelwerkstücken die Maschine per Hand zu beladen ist, wobei in diesem Fall es von Vorteil ist, wenn die herkömmliche Schutzvorrichtung nicht von der erfindungsgemäßen Schutzvorrichtung 1 ersetzt wurde, und in dieser Zeit die erfindungsgemäße Schutzvorrichtung 1 an einer anderen Maschine eingesetzt werden kann.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste:

- 1: Schutzvorrichtung
- 2: System für Prozesse
- 3: Öffnung
- 4: Roboter
- 5: Fixiervorrichtung
- 6: Anpassungsvorrichtung
- 7: Stäbe

## Patentansprüche

1. Station für Prozesse (2), wie z.B. prüfen, montieren sortieren, dichten, befüllen, bearbeiten und/odgl., wobei die Station (2) mindestens eine Öffnung (3), die zur Werkstückbeladung der Station (2) und/oder zur Werkstückentladung der Station (2) dient, aufweist und die Öffnung (3) zum Schutz einer Bedienperson mittels einer Schutzvorrichtung (1) zumindest teilweise versperrbar ist,
**dadurch gekennzeichnet,**
**dass** die Schutzvorrichtung (1) eine bewegbare Roboterzelle ist, die im Bedarfsfall von der Öffnung (3) zu deren Freigabe wegbewegbar ist, wobei in der Roboterzelle mindestens ein Roboter (4) angeordnet ist.

2. Station für Prozesse (2), nach Anspruch 1,
**dadurch gekennzeichnet,**
**dass** die Roboterzelle mittels einer Fixiervorrichtung (5) an der Station (2) angeordnet ist.

3. Station für Prozesse (2), nach Anspruch 1 oder 2,
**dadurch gekennzeichnet,**
**dass** die Roboterzelle lösbar an der Station (2) oder dem Boden angeordnet ist.

4. Station für Prozesse (2), nach einem der vorhergehenden Ansprüche,
**dadurch gekennzeichnet,**
**dass** die Roboterzelle schwenkbar, verschiebbar odgl. an der Station (2) angeordnet ist.

5. Station für Prozesse (2), nach einem der vorhergehenden Ansprüche,
**dadurch gekennzeichnet,**
**dass** die Schutzvorrichtung (1) die herkömmliche Schutzeinrichtung ergänzt.

6. Station für Prozesse (2), nach einem der vorhergehenden Ansprüche,
**dadurch gekennzeichnet,**
**dass** der Roboter (4) ein Knickarmroboter, Scararoboter oder ein Linear-Achsen-System ist.

7. Station für Prozesse (2), nach einem der Vorhergehenden Ansprüche,
**dadurch gekennzeichnet,**
**dass** der Roboter (4) ein Einzelgreifer-, Doppelgreifer oder Mehrfachgreifersystem aufweist.

8. Station für Prozesse (2), nach einem der vorhergehenden Ansprüche,
**dadurch gekennzeichnet,**
**dass** die Schutzvorrichtung (1) mindestens eine Tür aufweist.

9. Station für Prozesse (2), nach einem der vorhergehenden Ansprüche,
**dadurch gekennzeichnet,**
**dass** die Schutzvorrichtung (1) zur Anpassung mindestens an der der Station (2) zugewandten Seite eine Anpassvorrichtung (6) aufweist.

10. Station für Prozesse (2), nach Anspruch 9,
**dadurch gekennzeichnet,**
**dass** Anpassvorrichtung (6) als Tür ausgestaltet ist.

11. Station für Prozesse (2), nach Anspruch 9 oder 10,
**dadurch gekennzeichnet,**
**dass** die Anpassvorrichtung (6) an ihrer der Station (2) zugewandten Seite flexibles Material aufweist.

12. Station für Prozesse (2), nach Anspruch 11,
**dadurch gekennzeichnet,**
**dass** das flexible Material durch federbelastete Stäbe (7) gebildet wird.

13. Verfahren zum automatischen Be- und/oder Entladen einer Station für Prozesse (2), wie z.B. prüfen, montieren sortieren, dichten, befüllen, bearbeiten und/odgl., wobei die Station (2) mindestens eine Öffnung (3), die zur Werkstückbeladung der Station (2) und/oder zur Werkstückentladung der Station (2) dient, aufweist und die Öffnung (3) zum Schutz einer Bedienperson mittels der Schutzvorrichtung (1) zumindest teilweise versperrbar ist,
**dadurch gekennzeichnet,**
**dass** als Schutzvorrichtung (1) eine Roboterzelle eingesetzt wird, die zu ihrem Einsatz mittels einer Fixiervorrichtung (5) mit der Station (2) oder am Boden verbunden wird, wobei die Verbindung beweglich ist, so dass die Schutzvorrichtung (1) im Bedarfsfall ohne die Verbindung mit der Station (2) oder dem Boden unterbrechen zu müssen von der Öffnung (3) zu deren Freigabe wegbewegbar ist.

14. Verfahren, nach Anspruch 13,
**dadurch gekennzeichnet,**
**dass** die Schutzvorrichtung (1) von der Station (2) oder dem Boden getrennt wird, falls sie bei einer anderen Station (2) benötigt wird, um sie anschließend mittels der Fixiervorrichtung (5) mit der anderen Station (2) oder dem Boden zu verbinden.

15. Verfahren, nach Anspruch 13 oder 14,
**dadurch gekennzeichnet,**
**dass** als Station für Prozesse (2) eine Station für Prozesse (2) nach einem der Ansprüche 1 bis 12 eingesetzt wird.

## Claims

1. A station for processes (2), such as for example inspecting, assembling, sorting, sealing, filling, machining and/or the like, said station (2) comprising at least one opening (3), which is used for loading a workpiece onto the station (2) and/or for unloading a workpiece from the station (2), and the opening (3) being able to be at least partly closed off by means of a protection device (1) for the protection of an operator,
**characterized in that**
the protection device (1) is a mobile robot cell, which can be moved away from the opening (3) in order to release it when required, wherein at least one robot (4) is arranged in the robot cell.

2. The station for processes (2), according to Claim 1,
**characterized in that**
the robot cell is arranged on the station (2) by means of a fixing device (5).

3. The station for processes (2), according to Claim 1 or 2,
**characterized in that**
the robot cell is arranged detachably on the station (2) or on the ground.

4. The station for processes (2), according to one of the preceding claims,
**characterized in that**
the robot cell is arranged on the station (2) in a pivotable, displaceable or like manner.

5. The station for processes (2), according to one of the preceding claims,
**characterized in that**
the protection device (1) augments the conventional protection device.

6. The station for processes (2), according to one of the preceding claims,
**characterized in that**
the robot (4) is an articulated arm-type robot, a Scara-type robot or a linear-axis system.

7. The station for processes (2), according to one of the preceding claims,
**characterized in that**
the robot (4) comprises a single gripper, double gripper or multiple-gripper system.

8. The station for processes (2), according to one of the preceding claims,
**characterized in that**
the protection device (1) comprises at least one door.

9. The station for processes (2), according to one of the preceding claims,
**characterized in that**
the protection device (1) has an adapter device (6) for adapting to at least the side facing the station (2).

10. The station for processes (2), according to Claim 9,
**characterized in that**
the adapter device (6) is configured as a door.

11. The station for processes (2), according to Claim 9 or 10,
**characterized in that**
on its side facing the station (2) the adapter device (6) comprises flexible material.

12. The station for processes (2), according to Claim 11,
**characterized in that**
the flexible material is formed by spring-loaded rods (7).

13. A station for processes (2), such as for example inspecting, assembling, sorting, sealing, filling, machining and/or the like, said station (2) comprising at least one opening (3), which is used for loading a workpiece onto the station (2) and/or for unloading a workpiece from the station (2), and the opening (3) being able to be at least partly closed off by means of a protection device (1) for the protection of an operator,
**characterized in that**
as a protection device (1) a robot cell is employed, which to allow its used is connected to the station (2) or to the ground by means of a fixing device (5), wherein the connection is mobile, in such a manner that the protection device (1) can be moved away from the opening (3) to release it when required, without the connection to the station (2) or to the ground needing to be broken.

14. The method according to Claim 13,
**characterized in that**
the protection device (1) is separated from the station (2) or the ground whenever it is needed at another station (2), in order subsequently to connect it to the other station (2) or to the ground by means of the fixing device (5).

15. The method according to Claim 13 or 14,
**characterized in that**
as the station for processes (2), a station for processes (2) according to one of Claims 1 to 13 is used.

## Revendications

1. Station pour des processus (2), tels que par exemple test, montage, tri, étanchéification, remplissage, usinage et/ou similaires, la station (2) présentant au moins une ouverture (3), qui sert au chargement de la pièce sur la station (2) et/ou au déchargement de la pièce sur la station (2), et l'ouverture (3) pouvant être bloquée au moins partiellement pour la protection d'un utilisateur au moyen d'un dispositif de protection (1),
**caractérisée en ce que**
le dispositif de protection (1) est une cellule de robot mobile, qui, en cas de nécessité, peut être déplacée à partir de l'ouverture (3) pour sa libération, au moins un robot (4) étant disposé dans la cellule de robot.

2. Station pour processus (2) selon la revendication 1,
**caractérisée en ce que**
la cellule de robot est disposée au moyen d'un dispositif de fixation (5) sur la station (2).

3. Station pour processus (2) selon la revendication 1 ou 2,
**caractérisée en ce que**
la cellule de robot est disposée de façon amovible sur la station (2) ou le sol.

4. Station pour processus (2) selon l'une quelconque des revendications précédentes,
**caractérisée en ce que**
la cellule de robot est disposée de façon pivotante, coulissante ou similaire sur la station (2).

5. Station pour processus (2) selon l'une quelconque des revendications précédentes,
**caractérisée en ce que**
le dispositif de protection (1) complète le système de protection classique.

6. Station pour processus (2) selon l'une quelconque des revendications précédentes,
**caractérisée en ce que**
le robot (4) est un robot à bras pliant, un robot Scara ou un système à axes linéaires.

7. Station pour processus (2) selon l'une quelconque des revendications précédentes,
**caractérisée en ce que**
le robot (4) présente un système de grappin simple, un système de double grappin ou un système de grappin multiple.

8. Station pour processus (2) selon l'une quelconque des revendications précédentes,
**caractérisée en ce que**
le dispositif de protection (1) présente au moins une porte.

9. Station pour processus (2) selon l'une quelconque des revendications précédentes,
**caractérisée en ce que**
le dispositif de protection (1) présente un dispositif d'adaptation (6) pour l'adaptation au moins sur le côté tourné vers la station (2).

10. Station pour processus (2) selon la revendication 9,
**caractérisée en ce que**
le dispositif d'adaptation (6) est conçu comme porte.

11. Station pour processus (2) selon la revendication 9 ou 10,
**caractérisée en ce que**
le dispositif d'adaptation (6) présente du matériau flexible sur son côté tourné vers la station (2).

12. Station pour processus (2) selon la revendication 11,
**caractérisée en ce que**
le matériau flexible est formé par des barres (7) sollicitées par ressort.

13. Procédé pour le chargement et/ou le déchargement automatique d'une station pour des processus (2), tels que par exemple test, montage, tri, étanchéification, remplissage, usinage et/ou similaires, la station (2) présentant au moins une ouverture (3), qui sert au chargement de la pièce sur la station (2) et/ou au déchargement de la pièce sur la station (2), et l'ouverture (3) pouvant être bloquée au moins partiellement pour la protection d'un utilisateur au moyen du dispositif de protection (1),
**caractérisé en ce que**
une cellule de robot est utilisée comme dispositif de protection (1), laquelle est reliée pour son utilisation au moyen d'un dispositif de fixation (5) à la station (2) ou sur le sol, la liaison étant mobile, de sorte que, en cas de besoin, le dispositif de protection (1) peut être déplacé à partir de l'ouverture (3) pour sa libération sans être obligé d'interrompre la liaison avec la station (2) ou le sol.

14. Procédé selon la revendication 13,
**caractérisé en ce que**
le dispositif de protection (1) est séparé de la station (2) ou du sol dans le cas où il est utilisé sur une autre station (2), pour le relier ensuite au moyen du dispositif de fixation (5) à l'autre station (2) ou au sol.

15. Procédé selon la revendication 13 ou 14,
**caractérisé en ce que**
une station pour processus (2) selon l'une quelconque des revendications 1 à 13 est utilisée comme station pour processus (2).
